# EUROPEAN PATENT APPLICATION

(11) **EP 2 921 831 A1**
(43) Date of publication of application: **23.09.2015**
(21) Application number: 14001074.5
(22) Date of filing: 21.03.2014
(51) Int. Cl.: G01K 7/02

(54) **Thermocouple Open-Circuit Detection Circuit And Method**

(71) Applicant: Linear Technology Corporation, Milpitas, CA 95035-7417 (US)
(72) Inventor: Mayes, Michael Keith, Nevada City, CA 95959 (US); Kaplan, Todd Stuart, Grass Valley, CA 95945 (US); Bliss, David Edward, Loomis, CA 95650 (US)
(74) Representative: Müller-Boré & Partner Patentanwälte PartG mbB

(57) **Abstract**

A method for detecting an open-circuit in an external thermocouple network includes these steps: (a) injecting a current pulse of a predetermined duration into the external thermocouple network; and (b) measuring the voltage across the pair of terminals after a time period following the predetermined duration. In one example, the time period is sufficiently long to allow the current pulse to dissipate from the external thermocouple circuit when a thermocouple in the external thermocouple network does not have an open circuit. The thermocouple network may include a resistor-capacitor network provided between the thermocouple and one of the terminals.

## Description

### BACKGROUND OF THE INVENTION

### 1. Field of the Invention

The present invention relates to detecting an open circuit in a thermocouple network. In particular, the present invention relates to, in an integrated circuit, a method and a detection circuit for detecting an open-circuit in an external thermocouple network.

### 2. Discussion of the Related Art

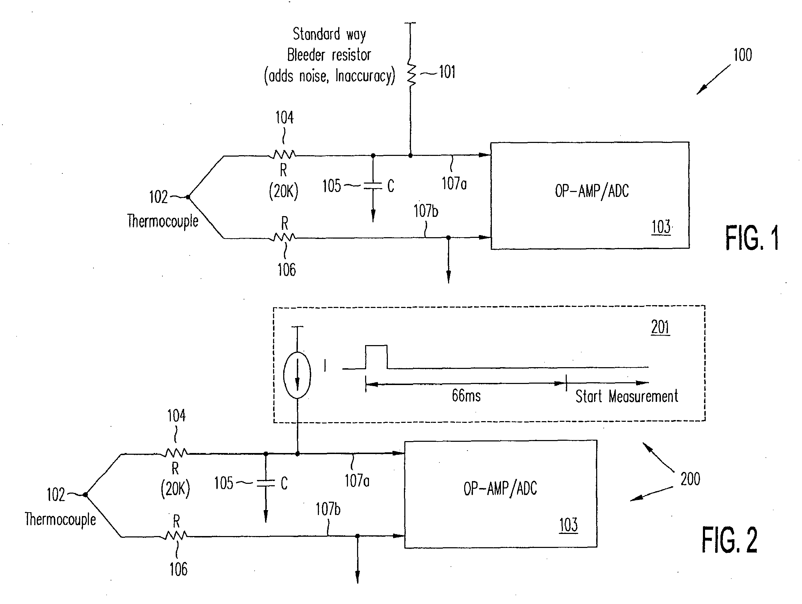

Systems that use a thermocouple to measure temperature require an open-circuit detection scheme. Figure 1 shows a conventional open-circuit detection circuit 100 provided in an integrated circuit for sensing the output voltage of an external thermocouple. As shown in Figure 1, detection circuit 100 receives a voltage from external thermocouple 102 across terminals 107a and 107b. This received voltage is measured, for example, by measurement circuit 103, which may include input buffers or amplifiers for conditioning the received signal and an analog-to-digital converter to digitize the amplified input signal. The signal path to terminals 107a and 107b has resistance represented by resistors 104 and 106, and capacitance represented by capacitor 105. The resistance and capacitance may be, in part or in total, parasitic and also function as filtering and protection. To detect an open circuit, a current is allowed to flow through device 101, which is typically provided by a resistor or a transistor connected between a supply voltage and terminal 107a. When conducting, device 101 serves as a weak pull-up resistor or a weak current source. Without an open circuit, the voltage across terminals 107a and 107b is the sum of the thermocouple voltage and the voltage drops across resistors 104 and 106. If an open circuit exists, however, the current in device 101 charges capacitor 105, such that the drop across terminals 107a and 107b rise to beyond the normal range of the thermocouple output voltage. However, detection circuit 100 introduces noise and offset errors because it is active at the time when measurement is made of the thermocouple. Further, when the external circuit includes protection circuitry or a measurement, error may result.

### SUMMARY

According to one embodiment of the present invention, a method is provided for detecting an open-circuit in an external thermocouple network. The thermocouple network may provide a voltage across a pair of terminals. In that embodiment, the method includes (a) injecting a current pulse of a predetermined duration into the external thermocouple network; and (b) measuring the voltage across the pair of terminals after a time period following the predetermined duration. In one embodiment, the time period is sufficiently long to allow the current pulse to dissipate from the external thermocouple circuit when a thermocouple in the external thermocouple network does not have an open circuit. The thermocouple network may include a resistor-capacitor network provided between the thermocouple and one of the terminals.

The present invention is better understood upon consideration of the detailed description below in conjunction with the accompanying drawings.

### BRIEF DESCRIPTION OF THE DRAWINGS

Figure 1 shows a conventional open-circuit detection circuit 100 provided in an integrated circuit for sensing an external thermocouple.
Figure 2 shows open-circuit detection circuit 200 which is provided in an integrated circuit for an external thermocouple, in accordance with one embodiment of the present invention

To facilitate comparison between figures, like elements may be provided like reference numerals across figures.

### DETAILED DESCRIPTION OF THE PREFERRED EMBODIMENTS

Rather than applying a current to the external circuit during the thermocouple measurement, one embodiment of the present invention excites the external circuit (i.e., the thermocouple network) prior to the measurement. Figure 2 shows open-circuit detection circuit 200 which is provided in an integrated circuit for sensing the output voltage of an external thermocouple. As shown in Figure 2, detection circuit 100 receives an input voltage across terminals 107a and 107b from thermocouple 102. The input voltage is measured, for example, by measurement circuit 103, which may include input buffers or amplifiers for conditioning the input signal and an analog-to-digital converter to digitize the amplified input signal. The signal path from the thermocouple to terminals 107a and 107b has resistance represented by resistors 104 and 106, and capacitance represented by capacitor 105. The resistance and capacitance may be, in part or in total, parasitic. To detect an open circuit, pulse circuit 201 provides a current pulse that is injected into the external circuit prior to a measurement being made to detect an open-circuit ("pre-measurement period"). The pulse from pulse circuit 201 is non-zero for a short duration (e.g., 10% of the pre-measurement period). In one implementation, the pre-measurement period is 66 ms. Thereafter, the voltage across terminals 107a and 107b is measured by measurement circuit 103. If the external thermocouple network performs normally (i.e., without an open circuit), the electrical effect of the pulse would have dissipated at the end of the pre-measurement period, and the thermocouple network settles to its initial state. The initial state can be recognized by reference to calibration results. However, if an open circuit exists, the charge in the current pulse is captured by capacitor 105, such that the drop across terminals 107a and 107b rises above the expected thermocouple operating voltage range. The charge is held in capacitor 105 even after the pre-measurement period to be measurable by measurement circuit 103. Because the open-circuit detection measurement occurs at a time when pulse circuit 201 is not active, no noise is injected by the open circuit detection circuitry into external circuit to affect normal measurement of the thermocouple network.

The detailed description above is provided to illustrate specific embodiments of the present invention and is not intended to be limiting. Numerous modifications and variations within the scope of the present invention are possible. The present invention is set forth in the accompanying claims.

## Claims

1. An apparatus for detecting an open-circuit in an external thermocouple network, the thermocouple network providing a voltage across a pair of terminals, the apparatus comprising:
a current pulse generator configured to inject a current pulse of a predetermined duration into the external thermocouple network; and
a measurement circuit that measures the voltage across the pair of terminals, the measurement circuit being activated after a time period following the predetermined duration.

2. The apparatus of Claim 1, wherein the thermocouple network comprises a resistor-capacitor network provided between the thermocouple and one of the terminals.

3. The apparatus of Claim 1 or 2, wherein the time period is sufficiently long to allow the current pulse to dissipate from the external thermocouple circuit when a thermocouple in the external thermocouple network does not have an open circuit.

4. A method for detecting an open-circuit in an external thermocouple network, the thermocouple network providing a voltage across a pair of terminals, the method comprising:
injecting a current pulse of a predetermined duration into the external thermocouple network; and
measuring the voltage across the pair of terminals after a time period following the predetermined duration.

5. The method of Claim 4, wherein the thermocouple network comprises a resistor-capacitor network provided between the thermocouple and one of the terminals.

6. The method of Claim 4 or 5, wherein the time period is sufficiently long to allow the current pulse to dissipate from the external thermocouple circuit when a thermocouple in the external thermocouple network does not have an open circuit.
